# EUROPEAN PATENT SPECIFICATION

(11) **EP 4 300 460 B1**
(45) Date of publication and mention of the grant of the patent: **15.10.2025**
(21) Application number: 22780350.9
(22) Date of filing: 23.03.2022
(51) Int. Cl.: G08G 1/16, B60W 40/02, B60W 30/00, B60W 30/02, B60W 30/08, B60W 50/08, B60W 30/14, B60W 30/16, B60W 30/18, G06V 20/56, G08G 1/0962, G08G 1/00

(54) **DEVICE FOR CONTROLLING MOBILE BODY, METHOD FOR CONTROLLING MOBILE BODY, AND STORAGE MEDIUM**
VORRICHTUNG ZUR STEUERUNG EINES MOBILEN KÖRPERS, VERFAHREN ZUR STEUERUNG EINES MOBILEN KÖRPERS UND SPEICHERMEDIUM
DISPOSITIF DE COMMANDE DE CORPS MOBILE, PROCÉDÉ DE COMMANDE DE CORPS MOBILE ET SUPPORT DE STOCKAGE

(30) Priority: 30.03.2021 JP 2021056992
(43) Date of publication of application: 03.01.2024
(73) Proprietor: HONDA MOTOR CO., LTD., Tokyo 105-8404 (JP)
(72) Inventor: MATSUNAGA, Hideki, Wako-shi, Saitama 351-0193 (JP); YASUI, Yuji, Wako-shi, Saitama 351-0193 (JP); MATSUMOTO, Takashi, Wako-shi, Saitama 351-0193 (JP); FUJIMOTO, Gakuyo, Wako-shi, Saitama 351-0193 (JP)
(74) Representative: Kiwit, Benedikt
(86) International application number: PCT/JP2022/013341
(87) International publication number: WO 2022/210135

(56) References cited:
- WO-A1-2017/168739
- WO-A1-2019/241565
- CA-A1- 3 053 687
- JP-A- 2009 089 758
- JP-A- 2017 100 490
- JP-A- 2017 100 490
- US-A1- 2019 101 916
- US-A1- 2019 248 439

## Description

### [Technical Field]

The present invention relates to a mobile object control device, a mobile object control method, and a storage medium.

### [Background Art]

In the related art, an invention of a single-seater electric vehicle that can move on a sidewalk has been disclosed (JP 2020 - 189 536 A).

US 2019/248 439 A1 describes a motorized scooter with a control unit comprising a PMD (Personal Mobility Device) assistant for safety compliance allowing to analyze information to allow speed control.

Document JP 2017 - 100 490 A describes an electric wheelchair including an operation lever for adjusting a travel speed of the electric wheelchair. An arithmetic device included in the electric wheelchair includes a setting part for setting an upper limit of a travel speed in accordance with an ambient degree of congestion of the electric wheelchair, and a control part for controlling a travel speed of the electric wheelchair on the basis of adjustment with the operation lever so as not to exceed the upper limit set by the setting part. When changing a travel speed of the electric wheelchair with setting change of an upper limit Vmax by the setting part, the control part gradually changes the travel speed to a target speed newly set with setting change of the upper limit Vmax.

Document CA 3 053 687 A1 describes a method for decelerating a vehicle with an ISA (intelligent speed adaptor) system identifying dynamic conditions.

### [Summary of Invention]

### [Technical Problem]

The conventional technology does not assume a mobile object that can move both on the roadway and in a prescribed region different from the roadway. For this reason, it may be difficult to perform appropriate control both on the roadway and in the prescribed region different from the roadway.

The present invention has been made in consideration of such circumstances, and an objective of the present invention is to provide a mobile object control device, a mobile object control method, and a storage medium capable of performing appropriate control both on a roadway and in a prescribed region different from the roadway.

### [Solution to Problem]

A mobile object control device, a mobile object control method, and a storage medium according to the present invention adopt the following configurations.
(1): According to an aspect of the present invention, there is provided a mobile object control device for controlling a mobile object capable of moving both on a roadway and in a prescribed region different from the roadway, the mobile object control device including: a road-type recognition unit configured to recognize whether the mobile object is moving on the roadway or in the prescribed region; and a control unit configured to at least partially control a speed of the mobile object, the control unit limiting the speed of the mobile object moving on the roadway to a first speed and limiting the speed of the mobile object moving in the prescribed region to a second speed that is lower than the first speed, wherein, when the road-type recognition unit recognizes that the mobile object moves on the roadway, the control unit decides on a target speed lower than the first speed, and the control unit decides on a final target speed by correcting the decided target speed on the basis of a speed instruction from an occupant via an instruction reception unit provided on the mobile object.
(2): In the above-described aspect (1), the road-type recognition unit causes an external notification device to provide a notification indicating that the mobile object is moving in the prescribed region to the outside of the mobile object when it is recognized that the mobile object is moving in the prescribed region.
(3): In the above-described aspect (1) or (2), the road-type recognition unit recognizes whether the mobile object is moving on the roadway or moving in the prescribed region on the basis of an output of an external world detection device for detecting a situation outside of the mobile object.
(4): In any one of the above-described aspects (1) to (3), the road-type recognition unit recognizes whether the mobile object is moving on the roadway or moving in the prescribed region on the basis of an operation of an occupant for a switch provided on the mobile object.
(5): In any one of the above-described aspects (1) to (4), the control unit receives the speed instruction from the occupant via the instruction reception unit provided on the mobile object, automatically controls at least the speed of the mobile object moving on the roadway with reference to the speed instruction, and limits the speed of the mobile object moving on the roadway to the first speed regardless of the speed instruction that has been designated.
(6): In any one of the above-described aspects (1) to (5), the control unit receives a speed instruction from an occupant via an instruction reception unit provided on the mobile object, automatically controls at least the speed of the mobile object moving in the prescribed region with reference to the speed instruction, and limits the speed of the mobile object moving in the prescribed region to the second speed regardless of the speed instruction that has been designated.
(7): In the above-described aspect (5) or (6), the instruction reception unit is a dial switch for issuing an instruction to increase or decrease the speed according to a rotation angle.
(8): In any one of the above-described aspects (1) to (7), a first operation element for receiving an acceleration or deceleration instruction and a second operation element for receiving a steering instruction are provided on the mobile object, and the control unit switches a mode to one of mode A in which acceleration, deceleration, and steering of the mobile object are controlled on the basis of an operation on one of the first operation element and the second operation element, mode B in which the acceleration, deceleration, and steering of the mobile object are controlled on the basis of an operation on both the first operation element and the second operation element, and mode C in which the acceleration, deceleration, and steering of the mobile object are controlled without being based on an operation on either the first operation element or the second operation element.
(9): According to another aspect of the present invention, there is provided a mobile object control method including: recognizing, by a computer for controlling a mobile object capable of moving both on a roadway and in a prescribed region different from the roadway, whether the mobile object is moving on the roadway or in the prescribed region; at least partially controlling, by the computer, a speed of the mobile object; and limiting, by the computer, the speed of the mobile object moving on the roadway to a first speed and limiting the speed of the mobile object moving in the prescribed region to a second speed that is lower than the first speed, wherein, when the computer recognizes that the mobile object moves on the roadway, the computer decides on a target speed lower than the first speed, and the computer decides on a final target speed by correcting the decided target speed on the basis of a speed instruction from an occupant via an instruction reception unit provided on the mobile object.
(10): According to yet another aspect of the present invention, there is provided a storage medium storing a program for causing a computer for controlling a mobile object capable of moving both on a roadway and in a prescribed region different from the roadway to: recognize whether the mobile object is moving on the roadway or in the prescribed region; at least partially control a speed of the mobile object; and limit the speed of the mobile object moving on the roadway to a first speed and limit the speed of the mobile object moving in the prescribed region to a second speed that is lower than the first speed. The storage medium may be a computer-readable non-transitory storage medium, wherein, when the computer recognizes that the mobile object moves on the roadway, the program causes the computer to decide on a target speed lower than the first speed, and causes the computer to decide on a final target speed by correcting the decided target speed on the basis of a speed instruction from an occupant via an instruction reception unit provided on the mobile object.

### [Advantageous Effects of Invention]

According to aspects (1) to (10), it is possible to perform appropriate control both on a roadway and in a prescribed region different from the roadway.

### [Brief Description of Drawings]

FIG. 1 is a diagram showing an example of a configuration of a mobile object and a control device according to an embodiment.
FIG. 2 is a diagram showing an example of an external configuration of a dial switch.
FIG. 3 is a perspective view of the mobile object seen from above.
FIG. 4 is a diagram showing an example of a situation where specific speed control is performed.
FIG. 5 is a flowchart showing an example of a flow of a process executed by the control device of the embodiment.

### [Description of Embodiments]

Hereinafter, a mobile object control device, a mobile object control method, and a storage medium according to the present invention will be described with reference to the drawings. A mobile object moves both on a roadway and in a prescribed region different from the roadway. The mobile object may be a vehicle that an occupant can board or may be an autonomous mobile object capable of performing an unmanned autonomous travel process. The latter autonomous mobile object is used, for example, for transporting luggage and the like. In the following description, it is assumed that one or more occupants are in the mobile object. The prescribed region is, for example, a sidewalk. Also, the prescribed region may be a part or all of a roadside strip, a bicycle lane, a public open space, or the like or may include all sidewalks, roadside strips, bicycle lanes, public open spaces, and the like. In the following description, the prescribed region is assumed to be a sidewalk. The part described as the "sidewalk" in the following description can be read as a "prescribed region" as appropriate.

### <First embodiment>

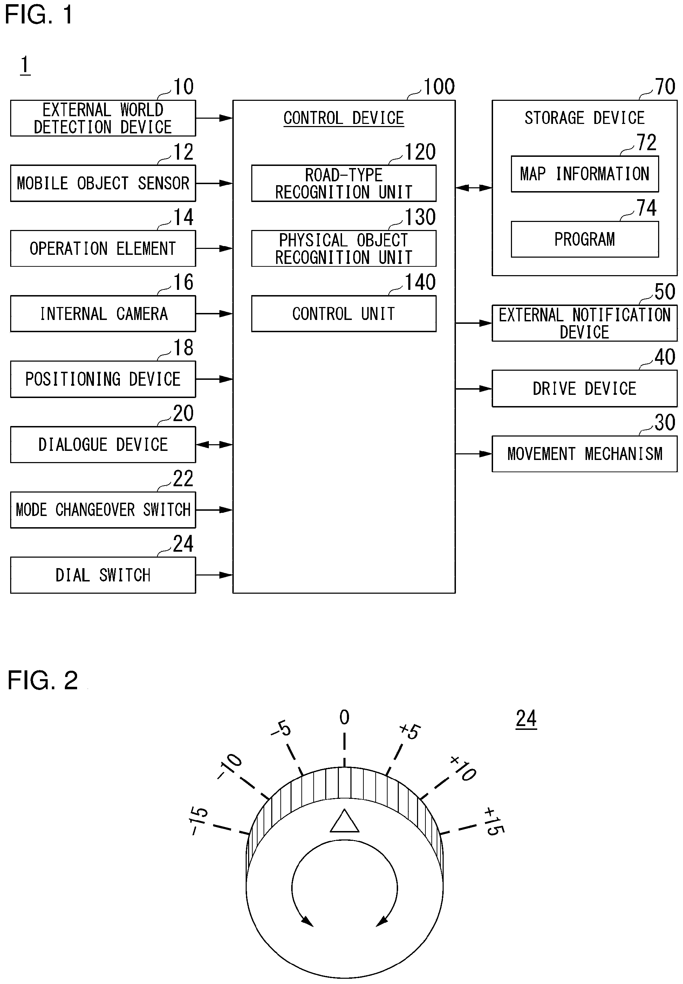

FIG. 1 is a diagram showing an example of a configuration of a mobile object 1 and a control device 100 according to the embodiment. The mobile object 1 includes, for example, an external world detection device 10, a mobile object sensor 12, an operation element 14, an internal camera 16, a positioning device 18, a dialogue device 20, a mode changeover switch 22, a dial switch 24, a movement mechanism 30, a drive device 40, an external notification device 50, a storage device 70, and a control device 100. Among these configurations, some configurations that are not essential for implementing the functions of the present invention may be omitted.

The external world detection device 10 is one of various types of devices whose detection ranges are in a travel direction of the mobile object 1. The external world detection device 10 includes an external camera, a radar device, a light detection and ranging (LIDAR) sensor, a sensor fusion device, and the like. The external world detection device 10 outputs information (an image, a position of a physical object, or the like) indicating a detection result to the control device 100.

The mobile object sensor 12 includes, for example, a speed sensor, an acceleration sensor, a yaw rate (angular speed) sensor, a direction sensor, an operation amount detection sensor attached to the operation element 14, and the like. The operation element 14 includes, for example, an operation element for issuing an acceleration/deceleration instruction (for example, an accelerator pedal or a brake pedal) and an operation element for issuing a steering instruction (for example, a steering wheel). In this case, the mobile object sensor 12 may include an accelerator opening degree sensor, a brake pedal depression amount sensor, a steering torque sensor, and the like. The mobile object 1 may include an operation element of an aspect other than the above (for example, a non-annular rotation operation element, a joystick, a button, or the like) as the operation element 14.

The internal camera 16 images at least the head of the occupant of the mobile object 1 from the front. The internal camera 16 is a digital camera that uses an imaging element such as a charge-coupled device (CCD) or a complementary metal oxide semiconductor (CMOS). The internal camera 16 outputs the captured image to the control device 100.

The positioning device 18 is a device for measuring a position of the mobile object 1. The positioning device 18 is, for example, a global navigation satellite system (GNSS) receiver and identifies the position of the mobile object 1 on the basis of a signal received from a GNSS satellite and outputs the identified position as position information. Also, the position information of the mobile object 1 may be estimated from a position of a Wi-Fi base station to which the communication device to be described below is connected.

The dialogue device 20 includes, for example, a speaker, a microphone, a touch panel, a communication device, and the like. The dialogue device 20 appropriately processes a sound of the occupant collected by the microphone, transmits the processed sound to a server device via a network using a communication device, and provides information of the sound from a speaker on the basis of the information returned from the server device. The dialogue device 20 may be referred to as an agent device, a concierge device, an assistance device, or the like. The server device has a sound recognition function, a natural language processing function, a semantic interpretation function, a reply content decision function, and the like. Also, the dialogue device 20 transmits the position information to the server device and the server device may return the position information and corresponding information of a facility in response to a guidance request issued by the occupant (for example, "Is there a good ramen shop around here?"). In this case, voice guidance such as "There is one at the point where you turn left ahead" is provided by the dialogue device 20. In addition to this, the dialogue device 20 has a function of receiving natural utterances of the occupant and returning an appropriate reply. Also, the dialogue device 20 has a function of performing simple dialogue without going through the server device, such as asking a question from the device side and receiving a reply, and may ask the occupant a question in response to a request from the control device 100. The dialogue device 20 is an example of an interface device.

The mode changeover switch 22 is a switch to be operated by an occupant. The mode changeover switch 22 may be a mechanical switch or a graphical user interface (GUI) switch set on a touch panel. The mode changeover switch 22, for example, receives an operation for switching a driving mode to any one of mode A, which is an assist mode in which one of a steering operation and acceleration/deceleration control is performed by the occupant and the other is automatically performed and which may be mode A-1 in which the steering operation is performed by the occupant and the acceleration/deceleration control is performed automatically and mode A-2 in which an acceleration/deceleration operation is performed by the occupant and steering control is performed automatically, mode B, which is a manual driving mode in which the steering operation and the acceleration/deceleration operation are performed by the occupant, and mode C, which is an automated driving mode in which the steering control and the acceleration/deceleration control are performed automatically.

FIG. 2 is a diagram showing an example of an external configuration of the dial switch 24. The dial switch 24 is installed at any position where an occupant P in the mobile object 1 can perform an operation and can be rotated clockwise and counterclockwise. For example, a clockwise direction is set to indicate acceleration and a counterclockwise direction is set to indicate deceleration. The dial switch 24 can change the speed by, for example, 5 [km/h] every time a scale is operated. Details of speed control using the dial switch 24 will be described below.

The movement mechanism 30 is a mechanism for moving the mobile object 1 on a road. The movement mechanism 30 is, for example, a wheel group including a steered wheel and a drive wheel. Also, the movement mechanism 30 may be a leg for multi-legged walking.

The drive device 40 outputs a force to the movement mechanism 30 and moves the mobile object 1. For example, the drive device 40 includes a motor for driving the drive wheel, a battery for storing electric power supplied to the motor, a steering device for adjusting a steering angle of the steered wheel, and the like. The drive device 40 may include an internal combustion engine, a fuel cell, or the like as a driving force output means or a power generation means. Also, the drive device 40 may further include a brake device due to friction force or air resistance.

The external notification device 50 is, for example, a lamp, a display device, a speaker, or the like provided on an outer plate part of the mobile object 1 and configured to provide an information notification to the outside of the mobile object 1. The external notification device 50 performs different operations in a state in which the mobile object 1 is moving on the sidewalk and a state in which the mobile object 1 is moving on the roadway. For example, the external notification device 50 is controlled so that light of a lamp is emitted when the mobile object 1 is moving on the sidewalk and the light of the lamp is not emitted when the mobile object 1 is moving on the roadway. A color of light emission of this lamp is preferably a color defined by law. The external notification device 50 may be controlled so that the lamp emits light in green when the mobile object 1 is moving on the sidewalk and the lamp emits light in blue when the mobile object 1 is moving on the roadway. When the external notification device 50 is a display device, the external notification device 50 displays text or graphics indicating that "the mobile object 1 is traveling on the sidewalk" when the mobile object 1 is traveling on the sidewalk.

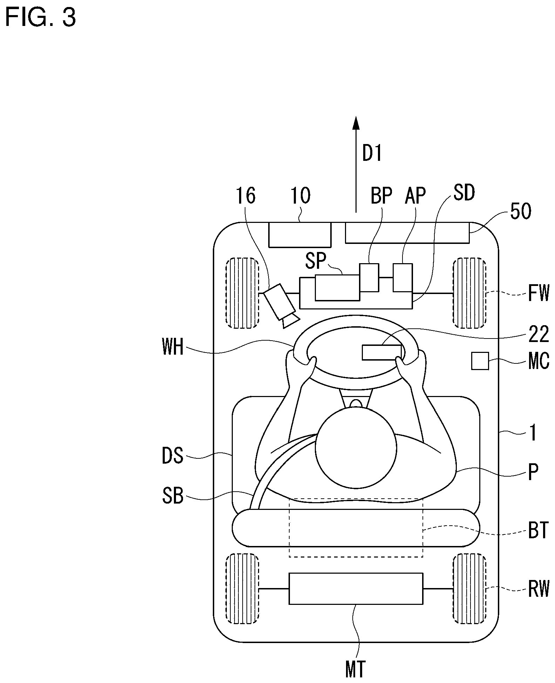

FIG. 3 is a perspective view of the mobile object 1 seen from above. In FIG. 3, FW denotes a steered wheel, RW denotes a drive wheel, SD denotes a steering device, MT denotes a motor, and BT denotes a battery. The steering device SD, the motor MT, and the battery BT are included in the drive device 40. Also, AP denotes an accelerator pedal, BP denotes a brake pedal, WH denotes a steering wheel, SP denotes a speaker, and MC denotes a microphone. The mobile object 1 shown in FIG. 3 is a single-seater mobile object and the occupant P sits in a driver's seat DS and wears a seat belt SB. An arrow D1 is a travel direction (speed vector) of the mobile object 1. The external world detection device 10 is provided near a front end of the mobile object 1, the internal camera 16 is at a position where the head of the occupant P can be imaged from the front of the occupant P, and the mode changeover switch 22 is provided at a boss portion of the steering wheel WH. Also, the external notification device 50 as a display device is provided near the front end of the mobile object 1.

Returning to FIG. 1, the storage device 70 is a non-transitory storage device such as, for example, a hard disk drive (HDD), a flash memory, or a random-access memory (RAM). The storage device 70 stores map information 72, a program 74 to be executed by the control device 100, and the like. Although the storage device 70 is shown outside of a frame of the control device 100 in FIG. 1, the storage device 70 may be included in the control device 100.

### [Control device]

The control device 100 includes, for example, a road-type recognition unit 120, a physical object recognition unit 130, and a control unit 140. For example, these components are implemented by a hardware processor such as a central processing unit (CPU) executing the program (software) 74. Also, some or all of these components may be implemented by hardware (including a circuit; circuitry) such as a large-scale integration (LSI) circuit, an application-specific integrated circuit (ASIC), a field-programmable gate array (FPGA), or a graphics processing unit (GPU) or may be implemented by software and hardware in cooperation. The program may be pre-stored in the storage device 70 or may be stored in a removable storage medium (a non-transitory storage medium) such as a DVD or a CD-ROM and installed in the storage device 70 when the storage medium is mounted in a drive device.

The road-type recognition unit 120 recognizes whether the mobile object 1 is moving on the roadway or the sidewalk. For example, the road-type recognition unit 120 recognizes whether the mobile object 1 is moving on the roadway or the sidewalk by analyzing an image captured by an external camera of the external world detection device 10. An example of image analysis is semantic segmentation. The road-type recognition unit 120 classifies each pixel in the frame of the image as a class (a roadway, a sidewalk, a boundary, a physical object, or the like) to assign a label, recognizes that the mobile object 1 is moving on the roadway when the number of pixels to which the label of the roadway is assigned is larger in a region corresponding to the front of the mobile object 1, and recognizes that the mobile object 1 is moving on the sidewalk when the number of pixels to which the label of the sidewalk is assigned is larger in the region corresponding to the front of the mobile object 1 in the image. In addition to this, the road-type recognition unit 120 may recognize that the mobile object 1 is moving on the roadway when a vehicle is recognized in the region corresponding to the front of the mobile object 1 in the image and recognize that the mobile object 1 is moving on the sidewalk when a pedestrian is recognized in the region corresponding to the front of the mobile object 1 in the image. Also, the road-type recognition unit 120 may recognize that the mobile object 1 is moving on the roadway when a width of a road surface region in the region corresponding to the front of the mobile object 1 in the image is larger and recognize that the mobile object 1 is moving on the sidewalk when the width of the road surface region in the region corresponding to the front of the mobile object 1 in the image is smaller. Also, the road-type recognition unit 120 may compare the position information of the mobile object 1 with the map information 72 and recognize whether the mobile object 1 is moving on the roadway or the sidewalk. In this case, the map information needs to have the accuracy of a degree to which the sidewalk and the roadway can be distinguished from position coordinates. When the "prescribed region" is not only a sidewalk, the road-type recognition unit 120 also performs a similar process for roadside strips, bicycle lanes, open spaces, and the like.

The physical object recognition unit 130 recognizes a physical object located near the mobile object 1 on the basis of an output of the external world detection device 10. Physical objects include some or all of mobile objects such as a vehicle, a bicycle, and a pedestrian, runway boundaries such as a road marking, a step, a guardrail, a shoulder, and a median strip, structures installed on the road such as a road sign and a signboard, and an obstacle such as a falling object that exists (falls) on the runway. For example, an acquisition unit 110 acquires information of the presence, position, and type of another mobile object by inputting an image captured by the external camera to a trained model trained to output the information of the presence, position, and type of a physical object when the image captured by the external camera of the external world detection device 10 is input. Other types of mobile objects can also be estimated on the basis of a size in the image, an intensity of a reflected wave received by a radar device of the external world detection device 10, and the like. Also, the acquisition unit 110 acquires the speed of another mobile object detected by the radar device using, for example, a Doppler shift or the like.

The control unit 140 controls, for example, the drive device 40 in accordance with a set operation mode.

In mode A-1, the control unit 140 refers to information of the runway and the physical object based on the output of the physical object recognition unit 130 and controls the motor MT of the drive device 40 so that a distance from the physical object located in front of the mobile object 1 is maintained at a certain distance or longer when the mobile object 1 moves on the roadway and the mobile object 1 moves at a first speed V1 (for example, a speed greater than or equal to 10 [km/h] and less than or equal to several tens of kilometers per hour [km/h]) when the distance from the physical object located in front of the mobile object 1 is sufficiently long. The control unit 140 controls the motor MT of the drive device 40 so that a certain distance to the physical object located in front of the mobile object 1 is maintained at the certain distance or longer when the mobile object 1 moves on the sidewalk and the mobile object 1 moves at a second speed V2 (for example, a speed lower than 10 [km/h]) when the distance from the physical object located in front of the mobile object 1 is sufficiently long. This function is similar to an adaptive cruise control (ACC) function of a vehicle with the first speed V1 or the second speed V2 set as a set speed and the technology used in ACC can be used. Also, in mode A-1, the control unit 140 controls the steering device SD so that a steering angle of the steered wheel is changed on the basis of an operation amount of the operation element 14 such as the steering wheel. This function is similar to that of the power steering device and the technology used in the power steering device can be used. Also, electronic control is not performed in relation to steering and the mobile object 1 may include a steering device in which the operation element 14 and the steering mechanism are mechanically connected.

In mode A-2, the control unit 140 refers to information of the runway and the physical object based on the output of the physical object recognition unit 130, generates a target trajectory along which the mobile object 1 can move by avoiding the physical object within the runway, and controls the steering device SD of the drive device 40 so that the mobile object 1 moves along the target trajectory. In relation to acceleration/deceleration, the control unit 140 controls the motor MT of the drive device 40 on the basis of the speed of the mobile object 1 and the operation amount of the accelerator pedal or the brake pedal. The control unit 140 controls the motor MT of the drive device 40 using the first speed V1 as an upper limit speed (in the case of mode A-2, when the upper limit speed is reached, it indicates that the mobile object 1 is not accelerated even if there is a further acceleration instruction) when the mobile object 1 is moving on the roadway and controls the drive device 40 using the second speed V2 as the upper limit speed when the mobile object 1 is moving on the sidewalk.

In mode B, the control unit 140 controls the motor MT of the drive device 40 on the basis of the speed of the mobile object 1 and the operation amount of the accelerator pedal or the brake pedal. The control unit 140 controls the motor MT of the drive device 40 using the first speed V1 as the upper limit speed (in the case of mode B, when the upper limit speed is reached, it indicates that the mobile object 1 is not accelerated even if there is a further acceleration instruction) when the mobile object 1 is moving on the roadway and controls the motor MT of the drive device 40 using the second speed V2 as the upper limit speed when the mobile object 1 is moving on the sidewalk. In relation to steering, it is similar to mode A-1.

In mode C, the control unit 140 refers to information of a runway and a physical object based on the output of the physical object recognition unit 130, generates a target trajectory along which the mobile object 1 can move by avoiding the physical object within the runway, and controls the drive device 40 so that the mobile object 1 moves along the target trajectory. In mode C as well, the control unit 140 controls the drive device 40 using the first speed V1 as the upper limit speed when the mobile object 1 is moving on the roadway and controls the drive device 40 using the second speed V2 as the upper limit speed when the mobile object 1 is moving on the sidewalk.

### [Control according to operation of dial switch]

The control unit 140 controls the speed of the mobile object 1 on the basis of an operation amount for the dial switch 24 in modes (modes A-1 and mode C) in which the speed is controlled regardless of the operation amount of the accelerator pedal or the brake pedal. When the mobile object 1 moves on the roadway in modes A-1 and C, the control unit 140 sets a target speed according to a situation. For example, the control unit 140 corrects a default target speed Vdef on the basis of an average speed of a road, the number of traffic participants, a distance to a physical object around the mobile object 1, and the like, and decides on a target speed Vref according to the situation. The default target speed Vdef is preset, for example, to a speed lower than the first speed V1. Further, the control unit 140 decides on a final target speed V# by correcting the target speed Vref according to the situation on the basis of an operation position of the dial switch 24. Here, when a value obtained by correcting the target speed Vref according to the situation on the basis of the operation position of the dial switch 24 exceeds the first speed V1, the control unit 140 sets the final target speed V# as the first speed V1. Thus, the control unit 140 receives a speed instruction from the occupant via an instruction reception unit such as the dial switch 24 provided on the mobile object 1 (something having a property of receiving an additional instruction for a current speed without receiving an instruction connected to the output torque such as the accelerator pedal). Also, the control unit 140 automatically controls the speed at least when the mobile object 1 moves on the roadway with reference to the additional instruction. However, the control unit 140 limits the speed at which the mobile object 1 moves on the roadway to the first speed V1 regardless of the speed instruction that has been designated. Thereby, for example, it is possible to comply with laws and regulations of a country where the mobile object 1 moves.

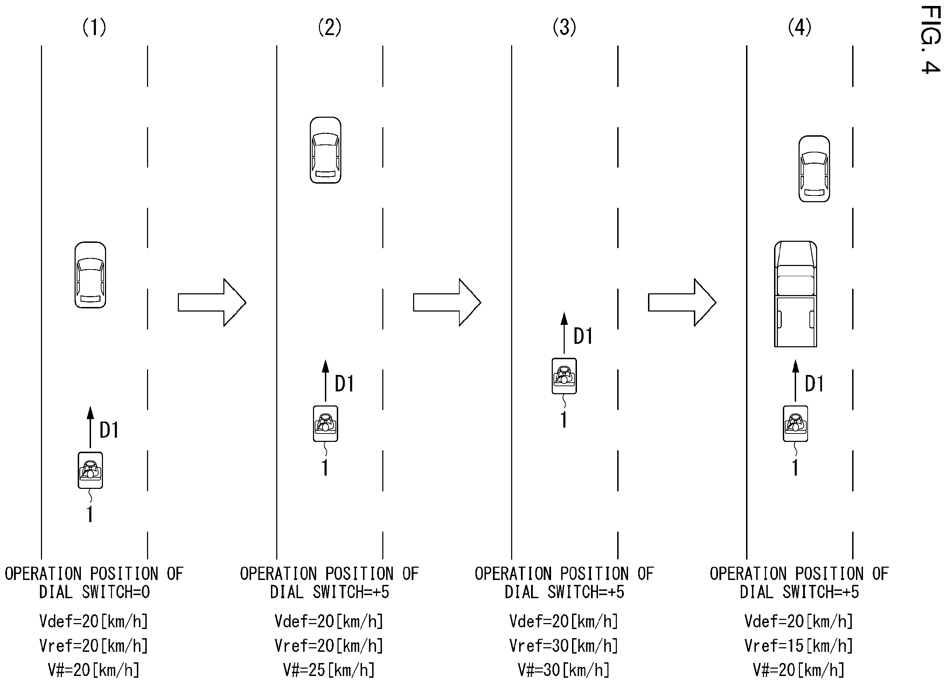

FIG. 4 is a diagram showing a change in control content based on an operation amount for the dial switch 24. In FIG. 4, it is assumed that the default target speed Vdef = 20 [km/h] and the first speed V1 = 30 [km/h]. In FIG. 4, in the situation shown in (1), because there is a vehicle on the travel direction side of the mobile object 1 and the control unit 140 determines to suppress acceleration according to its presence, the target speed Vref according to the situation is decided on to be the same as the default target speed Vdef. Because the operation position of the dial switch 24 is zero, the final target speed V# is also the same as the default target speed Vdef.

In the situation shown in the following (2), because the road situation does not change from the situation shown in (1), the target speed Vref according to the situation is decided on to be the same as the default target speed Vdef, but the operation position of the dial switch 24 is changed to +5, such that the final target speed V# has a value greater than the default target speed Vdef by 5 [km/h].

In the situation shown in the following (3), because the vehicle in front of the mobile object 1 is no longer recognized by the mobile object 1 due to a lane change or the like, the control unit 140 raises the target speed Vref according to the situation to the first speed V1. Although the operation position of the dial switch 24 is maintained at +5, the corrected speed exceeds the first speed V1 when the target speed Vref according to the situation is corrected by +5, such that the final target speed V# is limited to the first speed V1.

In the situation shown in the following (4), the front of the mobile object 1 is congested and the control unit 140 sets the target speed Vref according to the situation to a value less than the default target speed Vdef. On the other hand, the operation position of the dial switch 24 is +5 and a value obtained by correcting the target speed Vref according to the situation by +5 is set as the final target speed V#.

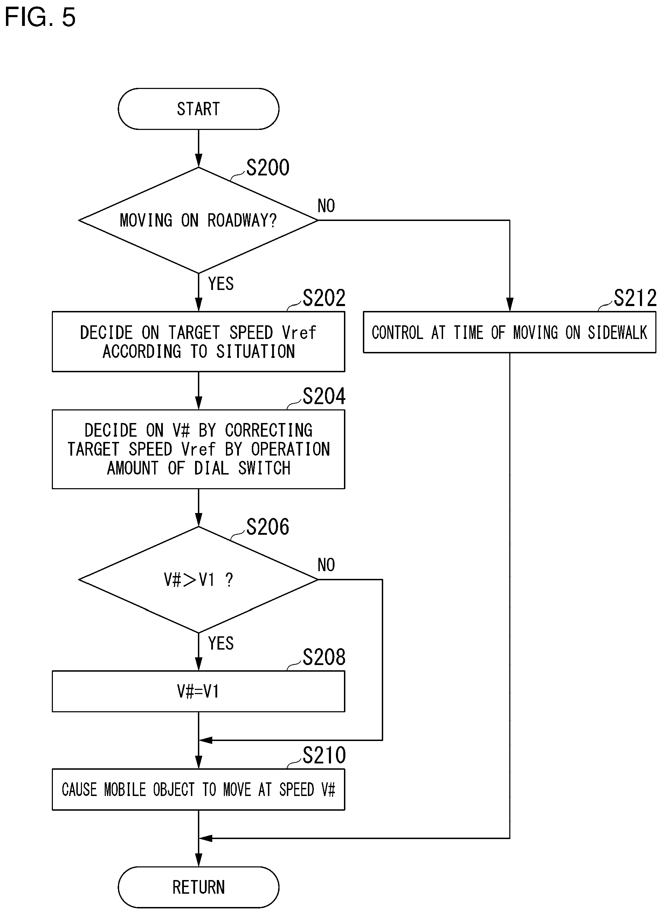

FIG. 5 is a flowchart showing an example of a flow of a process executed by the control device 100 of the embodiment. In the process of the present flowchart, mode A is assumed. The process of the present flowchart is iteratively executed, for example, at prescribed intervals.

First, the road-type recognition unit 120 determines whether or not the mobile object 1 is moving on the roadway (whether the mobile object 1 is moving on the sidewalk) (step S200). When it is determined that the mobile object 1 is moving on the roadway, the control unit 140 decides on the target speed Vref according to the situation by correcting the default target speed Vdef on the basis of an average speed of the road, the number of traffic participants, a distance from a physical object near the mobile object 1, and the like as described above (step S202) and decides on the final target speed V# by correcting the default target speed Vdef according to the situation on the basis of the operation position of the dial switch 24 (step S204). Subsequently, the control unit 140 determines whether or not the final target speed V# exceeds the first speed V1 (step S206). When the final target speed V# exceeds the first speed V1, the control unit 140 limits the final target speed V# to the first speed V1 (step S208). Also, the control unit 140 moves the mobile object 1 at the final target speed V# (step S210).

Also, when it is determined in step S200 that the mobile object 1 is moving on the sidewalk, the control unit 140 performs control of a case where the mobile object 1 is moving on the sidewalk (step S212).

The above-described "control according to the operation of the dial switch" may be performed not only when the mobile object 1 is moving on the roadway but also when the mobile object 1 is moving on the sidewalk. In this case, the control unit 140 decides on the target speed Vref according to the situation and decides on the final target speed V# by correcting the target speed Vref according to the situation on the basis of the operation position of the dial switch 24 when the mobile object 1 is moving on the sidewalk and sets the final target speed V# as the second speed V2 when a value obtained by correcting the target speed Vref according to the situation on the basis of the operation position of the dial switch 24 exceeds the second speed V2. Although it is assumed that control according to the operation of the dial switch is executed only for the roadway in the flowchart of FIG. 5, processing similar to steps S202 to S210 (in this regard, V1 is replaced with V2) is performed even if the mobile object 1 is moving on the sidewalk in a case where control according to an operation of the dial switch is performed even if the mobile object 1 is moving on the sidewalk.

According to the first embodiment described above, there are provided the road-type recognition unit 120 configured to recognize whether the mobile object 1 is moving on a roadway or a sidewalk and the control unit 140 configured to at least partially control a speed of the mobile object 1, wherein the control unit 140 limits the speed of the mobile object 1 moving on the roadway to the first speed V1 and limits the speed of the mobile object 1 moving on the sidewalk to the second speed V2 that is lower than the first speed V1, whereby it is possible to perform appropriate control on both the roadway and the sidewalk.

### <Second embodiment>

Hereinafter, a second embodiment will be described. The control device 100 of the second embodiment is different from that of the first embodiment in the function of the road-type recognition unit 120. The road-type recognition unit 120 of the second embodiment, for example, recognizes whether the mobile object 1 is traveling on the roadway or on the sidewalk in accordance with the operation of the occupant performed on a road-type input switch (not shown) provided on the mobile object. The road-type input switch is provided, for example, in the boss portion of the steering wheel WH or the like. The road-type input switch is, for example, operable up and down, has a mechanism for holding a position where an operation is performed, and indicates a roadway when it is operated on the upper side, and indicates a sidewalk when it is operated on the lower side. Also, the road-type input switch is provided in the form of a button or a GUI switch, may be switched for recognition during traveling on the sidewalk when an operation is performed in a state in which the control device 100 is recognizing traveling on the roadway, and may be switched for recognition during traveling on the roadway when an operation is performed in a state in which the control device 100 is recognizing traveling on the sidewalk. According to the configuration, it is possible to omit a function of automatically recognizing whether the mobile object 1 is traveling on the roadway or the sidewalk and reduce the processing load and the cost. In this regard, because there is a possibility of an erroneous operation of the occupant, the external notification device 50 preferably externally provides an information notification in the second embodiment.

### <Others>

In each of the above embodiments, the control unit 140 may execute only control of either mode A or mode B. That is, the mobile object 1 may execute the assist mode without executing the manual mode or may execute the manual mode without executing the assist mode. Also, the control unit 140 executes control of both mode A and mode B, but may perform specific speed control only when either mode A or mode B is executed. In either case, it may be arbitrarily determined whether to perform the control of mode C.

Also, the mobile object 1 may not have an accelerator pedal and may receive speed instructions exclusively via the dial switch 24. In this case, mode A-2 and mode B are not executed and only mode A-1 and mode C are executed substantially.

Although modes for carrying out the present invention have been described above using embodiments, the present invention is not limited to the embodiments and various modifications and substitutions can also be made without departing from the scope of the present invention as defined by the appended claims.

### [Reference Signs List]

1 Mobile object
10 External world detection device
12 Mobile object sensor
14 Operation element
16 Internal camera
18 Positioning device
20 Dialogue device
22 Mode changeover switch
24 Dial Switch
30 Movement mechanism
40 Drive device
50 External notification device
70 Storage device
100 Control device
120 Road-type recognition unit
130 Physical object recognition unit
140 Control unit

## Claims

1. A mobile object control device for controlling a mobile object (1) capable of moving both on a roadway and in a prescribed region different from the roadway, the mobile object control device comprising:
a road-type recognition unit (120) configured to recognize whether the mobile object (1) is moving on the roadway or in the prescribed region; and
a control unit (140) configured to at least partially control a speed of the mobile object (1), the control unit (140) limiting the speed of the mobile object (1) moving on the roadway to a first speed (V1) and limiting the speed of the mobile object (1) moving in the prescribed region to a second speed (V2) that is lower than the first speed (V1),
**characterized in that**
when the road-type recognition unit (120) recognizes that the mobile object (1) moves on the roadway, the control unit (140) decides on a target speed (Vref) speed lower than the first speed (V1), and the control unit (140) decides on a final target speed (V#) by correcting the decided target speed V(ref) speed on the basis of a speed instruction from an occupant via an instruction reception unit provided on the mobile object (1).

2. The mobile object control device according to claim 1, wherein the road-type recognition unit (120) causes an external notification device (50) to provide a notification indicating that the mobile object (1) is moving in the prescribed region to the outside of the mobile object (1) when it is recognized that the mobile object (1) is moving in the prescribed region.

3. The mobile object control device according to claim 1 or 2, wherein the road-type recognition unit (120) recognizes whether the mobile object (1) is moving on the roadway or moving in the prescribed region on the basis of an output of an external world detection device for detecting a situation outside of the mobile object (1).

4. The mobile object control device according to any one of claims 1 to 3, wherein the road-type recognition unit (120) recognizes whether the mobile object (1) is moving on the roadway or moving in the prescribed region on the basis of an operation of an occupant for a switch provided on the mobile object (1).

5. The mobile object control device according to any one of claims 1 to 4, wherein the control unit (140) receives the speed instruction from the occupant via the instruction reception unit provided on the mobile object (1), automatically controls at least the speed of the mobile object (1) moving on the roadway with reference to the speed instruction, and limits the speed of the mobile object (1) moving on the roadway to the first speed regardless of the speed instruction that has been designated.

6. The mobile object control device according to any one of claims 1 to 5, wherein the control unit (140) receives a speed instruction from an occupant via the instruction reception unit provided on the mobile object (1), automatically controls at least the speed of the mobile object (1) moving in the prescribed region with reference to the speed instruction, and limits the speed of the mobile object (1) moving in the prescribed region to the second speed regardless of the speed instruction that has been designated.

7. The mobile object control device according to claim 5 or 6, wherein the instruction reception unit is a dial switch for issuing an instruction to increase or decrease the speed according to a rotation angle.

8. The mobile object control device according to any one of claims 1 to 7,
wherein a first operation element for receiving an acceleration or deceleration instruction and a second operation element for receiving a steering instruction are provided on the mobile object (1), and
wherein the control unit (140) switches a mode to one of mode A in which acceleration, deceleration, and steering of the mobile object (1) are controlled on the basis of an operation on one of the first operation element and the second operation element, mode B in which the acceleration, deceleration, and steering of the mobile object (1) are controlled on the basis of an operation on both the first operation element and the second operation element, and mode C in which the acceleration, deceleration, and steering of the mobile object (1) are controlled without being based on an operation on either the first operation element or the second operation element.

9. The mobile object control device according to any one of claims 1 to 8, wherein
when a value obtained by correcting the target speed on the basis of an operation position of the instruction reception unit exceeds the first speed, the control unit (140) sets the final target speed as the first speed, the control unit (140) moves the mobile object (1) at the final target speed.

10. The mobile object control device according to any one of claims 1 to 9, wherein the control unit (140) decides on the target speed by correcting a default target speed according to a situation when the mobile object (1) moves.

11. A mobile object control method comprising:
recognizing, by a computer for controlling a mobile object (1) capable of moving both on a roadway and in a prescribed region different from the roadway, whether the mobile object (1) is moving on the roadway or in the prescribed region;
at least partially controlling, by the computer, a speed of the mobile object (1); and
limiting, by the computer, the speed of the mobile object (1) moving on the roadway to a first speed (V1) speed and limiting the speed of the mobile object (1) moving in the prescribed region to a second speed (V2) that is lower than the first speed (V1),
**characterized in that**
when the computer recognizes that the mobile object (1) moves on the roadway, the computer decides on a target speed (Vref) lower than the first speed (V1), and the computer decides on a final target speed (V#) by correcting the decided target speed (Vref) on the basis of a speed instruction from an occupant via an instruction reception unit provided on the mobile object (1).

12. A storage medium storing a program for causing a computer for controlling a mobile object (1) capable of moving both on a roadway and in a prescribed region different from the roadway to:
recognize whether the mobile object is (1) moving on the roadway or in the prescribed region;
at least partially control a speed of the mobile object (1); and limit the speed of the mobile object moving on the roadway to a first speed (V1) and limit the speed of the mobile object (1) moving in the prescribed region to a second speed (V2) that is lower than the first speed (V1),
**characterized in that**
when the computer recognizes that the mobile object (1) moves on the roadway, the program causes the computer to decide on a target speed (Vref) speedlower than the first speed (V1), and causes the computer to decide on a final target speed (V#) by correcting the decided target speed (Vref) on the basis of a speed instruction from an occupant via an instruction reception unit provided on the mobile object (1).

## Patentansprüche

1. Eine Vorrichtung zur Steuerung eines mobilen Objekts (1), welches sich sowohl auf einer Fahrbahn als auch in einem sich von der Fahrbahn unterscheidenden vorgeschriebenen Bereich bewegen kann, wobei die Vorrichtung zur Steuerung eines mobilen Objekts aufweist:
eine Fahrbahntyp-Erkennungseinheit (120), die so ausgebildet ist, dass sie erkennt, ob sich das mobile Objekt (1) auf der Fahrbahn oder in dem vorgeschriebenen Bereich bewegt; und
eine Steuereinheit (140), die so ausgebildet ist, dass sie die Geschwindigkeit des beweglichen Objekts (1) zumindest teilweise steuert, wobei die Steuereinheit (140) die Geschwindigkeit des sich auf der Fahrbahn bewegenden beweglichen Objekts (1) auf eine erste Geschwindigkeit (V1) begrenzt und die Geschwindigkeit des sich in dem vorgeschriebenen Bereich bewegenden beweglichen Objekts (1) auf eine zweite Geschwindigkeit (V2) begrenzt, die niedriger ist als die erste Geschwindigkeit (V1),
**dadurch gekennzeichnet, dass**,
wenn die Fahrbahntyp-Erkennungseinheit (120) erkennt, dass sich das mobile Objekt (1) auf der Fahrbahn bewegt, die Steuereinheit (140) eine Sollgeschwindigkeit (Vref) festlegt, die niedriger ist als die erste Geschwindigkeit (V1), und die Steuereinheit (140) eine endgültige Sollgeschwindigkeit (V#) festlegt, indem sie, auf der Grundlage einer Geschwindigkeitsanweisung eines Insassen über eine in dem mobilen Objekt (1) vorgesehene Anweisungsempfangseinheit, die festgelegte Sollgeschwindigkeit (Vref) korrigiert.

2. Die Vorrichtung zur Steuerung eines mobilen Objekts nach Anspruch 1, wobei die Fahrbahntyp-Erkennungseinheit (120), wenn erkannt wird, dass sich das mobile Objekt (1) in dem vorgeschriebenen Bereich bewegt, eine externe Benachrichtigungsvorrichtung (50) veranlasst, eine Benachrichtigung in die Umgebung des mobilen Objekts (1) zu senden, welche anzeigt, dass sich das mobile Objekt (1) in dem vorgeschriebenen Bereich bewegt.

3. Die Vorrichtung zur Steuerung eines mobilen Objekts nach Anspruch 1 oder 2, wobei die Fahrbahntyp-Erkennungseinheit (120), auf der Grundlage einer Ausgabe einer Außenwelt-Erfassungsvorrichtung zum Erfassen einer Situation außerhalb des mobilen Objekts (1), erkennt, ob sich das mobile Objekt (1) auf der Fahrbahn oder in dem vorgeschriebenen Bereich bewegt.

4. Die Vorrichtung zur Steuerung eines mobilen Objekts nach einem der Ansprüche 1 bis 3, wobei die Fahrbahntyp-Erkennungseinheit (120), auf der Grundlage einer Betätigung eines an dem mobilen Objekt (1) vorgesehenen Schalters durch einen Insassen, erkennt, ob sich das mobile Objekt (1) auf der Fahrbahn oder in dem vorgeschriebenen Bereich bewegt.

5. Die Vorrichtung zur Steuerung eines mobilen Objekts nach einem der Ansprüche 1 bis **4,** wobei die Steuereinheit (140) die Geschwindigkeitsanweisung von dem Insassen über die am mobilen Objekt (1) vorgesehene Anweisungsempfangseinheit empfängt, zumindest die Geschwindigkeit des sich auf der Fahrbahn bewegenden mobilen Objekts (1) unter Bezugnahme auf die Geschwindigkeitsanweisung automatisch steuert und die Geschwindigkeit des sich auf der Fahrbahn bewegenden mobilen Objekts (1), unabhängig von der vorgesehenen Geschwindigkeitsanweisung, auf die erste Geschwindigkeit begrenzt.

6. Die Vorrichtung zur Steuerung eines mobilen Objekts nach einem der Ansprüche 1 bis 5, wobei die Steuereinheit (140) über die am mobilen Objekt (1) vorgesehene Anweisungsempfangseinheit eine Geschwindigkeitsanweisung von einem Insassen empfängt, zumindest die Geschwindigkeit des sich in dem vorgeschriebenen Bereich bewegenden mobilen Objekts (1) unter Bezugnahme auf die Geschwindigkeitsanweisung automatisch steuert und die Geschwindigkeit des sich in dem vorgeschriebenen Bereich bewegenden mobilen Objekts (1), unabhängig von der vorgesehenen Geschwindigkeitsanweisung, auf die zweite Geschwindigkeit begrenzt.

7. Die Vorrichtung zur Steuerung eines mobilen Objekts nach Anspruch 5 oder 6, wobei die Anweisungsempfangseinheit ein Drehknopf ist, um entsprechend einem Drehwinkel eine Anweisung zum Erhöhen oder Verringern der Geschwindigkeit auszugeben.

8. Die Vorrichtung zur Steuerung eines mobilen Objekts nach einem der Ansprüche 1 bis 7, wobei an dem mobilen Objekt (1) ein erstes Betätigungselement, zum Empfangen einer Beschleunigungs- oder Verzögerungsanweisung, sowie ein zweites Betätigungselement, zum Empfangen einer Lenkanweisung, vorgesehen sind, und
wobei die Steuereinheit (140) einen Modus auf einen der folgenden Modi umschaltet: Modus A, in dem, auf der Grundlage einer Betätigung des ersten Betätigungselements oder des zweiten Betätigungselements, die Beschleunigung, Verzögerung und Lenkung des mobilen Objekts (1) gesteuert werden, Modus B, in dem, auf der Grundlage einer Betätigung sowohl des ersten Betätigungselements als auch des zweiten Betätigungselements, die Beschleunigung, Verzögerung und Lenkung des mobilen Objekts (1) gesteuert werden, und Modus C, in dem die Beschleunigung, Verzögerung und Lenkung des mobilen Objekts (1) gesteuert werden, ohne dass dies auf der Grundlage einer Betätigung des ersten Betätigungselements oder des zweiten Betätigungselements erfolgt.

9. Die Vorrichtung zur Steuerung eines mobilen Objekts nach einem der Ansprüche 1 bis 8, wobei,
wenn ein durch Korrektur der Sollgeschwindigkeit auf der Grundlage einer Betriebsposition der Anweisungsempfangseinheit erhaltener Wert die erste Geschwindigkeit überschreitet, die Steuereinheit (140) die endgültige Sollgeschwindigkeit als erste Geschwindigkeit festlegt und das bewegliche Objekt (1) mit der endgültigen Sollgeschwindigkeit bewegt.

10. Die Vorrichtung zur Steuerung eines mobilen Objekts nach einem der Ansprüche 1 bis 9, wobei
die Steuereinheit (140) die Sollgeschwindigkeit dadurch festlegt, dass sie, entsprechend einer Situation, in der sich das mobile Objekt (1) bewegt, eine voreingestellte Sollgeschwindigkeit korrigiert.

11. Ein Verfahren zur Steuerung eines mobilen Objekts, aufweisend:
Erkennen, durch einen zur Steuerung eines mobilen Objekts (1), welches sich sowohl auf einer Fahrbahn als auch in einem sich von der Fahrbahn unterscheidenden vorgeschriebenen Bereich bewegen kann, vorgesehenen Computer, ob sich das mobile Objekt (1) auf der Fahrbahn bewegt oder sich in dem vorgeschriebenen Bereich bewegt;
zumindest teilweises Steuern, durch den Computer, einer Geschwindigkeit des mobilen Objekts (1); und
Begrenzen, durch den Computer, der Geschwindigkeit des sich auf der Fahrbahn bewegenden mobilen Objekts (1) auf eine erste Geschwindigkeit (V1); und
Begrenzen der Geschwindigkeit des sich in dem vorgeschriebenen Bereich bewegenden mobilen Objekts (1) auf eine zweite Geschwindigkeit (V2), die niedriger ist als die erste Geschwindigkeit (V1),
**dadurch gekennzeichnet, dass**,
wenn der Computer erkennt, dass sich das mobile Objekt (1) auf der Fahrbahn bewegt, der Computer eine Sollgeschwindigkeit (Vref) festlegt, die niedriger ist als die erste Geschwindigkeit (V1), und der Computer eine endgültige Sollgeschwindigkeit (V#) festlegt, welche, auf der Grundlage einer Geschwindigkeitsanweisung eines Insassen über eine am mobilen Objekt (1) vorgesehene Anweisungsempfangseinheit, die festgelegte Sollgeschwindigkeit (Vref) korrigiert.

12. Ein Speichermedium, welches ein Programm speichert, um einen Computer zur Steuerung eines sich sowohl auf einer Fahrbahn als auch in einem sich von der Fahrbahn unterscheidenden vorgeschriebenen Bereich bewegbaren mobilen Objekts (1) dazu zu veranlassen:
zu erkennen, ob sich das mobile Objekt (1) auf der Fahrbahn oder in dem vorgeschriebenen Bereich bewegt;
eine Geschwindigkeit des mobilen Objekts (1) zumindest teilweise zu steuern; und
die Geschwindigkeit des sich auf der Fahrbahn bewegenden mobilen Objekts auf eine erste Geschwindigkeit (V1) zu begrenzen, und die Geschwindigkeit des sich in dem vorgeschriebenen Bereich bewegenden mobilen Objekts (1) auf eine zweite Geschwindigkeit (V2), die niedriger ist als die erste Geschwindigkeit (V1), zu begrenzen,
**dadurch gekennzeichnet, dass**,
wenn der Computer erkennt, dass sich das mobile Objekt (1) auf der Fahrbahn bewegt, das Programm den Computer veranlasst, eine Sollgeschwindigkeit (Vref) festzulegen, die niedriger ist als die erste Geschwindigkeit (V1), und den Computer veranlasst, eine endgültige Sollgeschwindigkeit (V#) festzulegen, welche, auf der Grundlage einer Geschwindigkeitsanweisung eines Insassen über eine am mobilen Objekt (1) vorgesehene Anweisungsempfangseinheit, die festgelegte Sollgeschwindigkeit (Vref) korrigiert.

## Revendications

1. Dispositif de commande d'objet mobile pour commander un objet mobile (1) apte à se déplacer à la fois sur une chaussée et dans une région prescrite différente de la chaussée, le dispositif de commande d'objet mobile comportant :
une unité de reconnaissance de type de route (120) configurée pour reconnaître si l'objet mobile (1) se déplace sur la chaussée ou dans la région prescrite ; et
une unité de commande (140) configurée pour commander au moins partiellement une vitesse de l'objet mobile (1), l'unité de commande (140) limitant la vitesse de l'objet mobile (1) se déplaçant sur la chaussée à une première vitesse (V1) et limitant la vitesse de l'objet mobile (1) se déplaçant dans la région prescrite à une deuxième vitesse (V2) inférieure à la première vitesse (V1),
**caractérisé en ce que**
lorsque l'unité de reconnaissance de type de route (120) détecte que l'objet mobile (1) se déplace sur la chaussée, l'unité de commande (140) décide d'une vitesse cible (Vref) inférieure à la première vitesse (V1), et l'unité de commande (140) décide d'une vitesse cible finale (V#) en corrigeant la vitesse cible décidée (Vref) sur la base d'une instruction de vitesse d'un occupant par le biais d'une unité de réception d'instructions prévue sur l'objet mobile (1).

2. Dispositif de commande d'objet mobile selon la revendication 1, dans lequel l'unité de reconnaissance de type de route (120) amène un dispositif de notification externe (50) à fournir une notification indiquant que l'objet mobile (1) se déplace dans la région prescrite vers l'extérieur de l'objet mobile (1) lorsqu'il est reconnu que l'objet mobile (1) se déplace dans la région prescrite.

3. Dispositif de commande d'objet mobile selon la revendication 1 ou 2, dans lequel l'unité de reconnaissance de type de route (120) reconnaît si l'objet mobile (1) se déplace sur la chaussée ou se déplace dans la région prescrite sur la base d'une sortie d'un dispositif de détection de monde externe pour détecter une situation à l'extérieur de l'objet mobile (1).

4. Dispositif de commande d'objet mobile selon l'une quelconque des revendications 1 à 3, dans lequel l'unité de reconnaissance de type de route (120) reconnaît si l'objet mobile (1) se déplace sur la chaussée ou se déplace dans la région prescrite sur la base d'une opération d'un occupant pour un commutateur prévu sur l'objet mobile (1).

5. Dispositif de commande d'objet mobile selon l'une quelconque des revendications 1 à 4, dans lequel l'unité de commande (140) reçoit l'instruction de vitesse de l'occupant par l'intermédiaire de l'unité de réception d'instructions prévue sur l'objet mobile (1), commande automatiquement au moins la vitesse de l'objet mobile (1) se déplaçant sur la chaussée en référence à l'instruction de vitesse, et limite la vitesse de l'objet mobile (1) se déplaçant sur la chaussée à la première vitesse quelle que soit l'instruction de vitesse qui a été désignée.

6. Dispositif de commande d'objet mobile selon l'une quelconque des revendications 1 à 5, dans lequel l'unité de commande (140) reçoit une instruction de vitesse d'un occupant par l'intermédiaire de l'unité de réception d'instructions prévue sur l'objet mobile (1), commande automatiquement au moins la vitesse de l'objet mobile (1) se déplaçant dans la région prescrite en référence à l'instruction de vitesse, et limite la vitesse de l'objet mobile (1) se déplaçant dans la région prescrite à la deuxième vitesse quelle que soit l'instruction de vitesse qui a été désignée.

7. Dispositif de commande d'objet mobile selon la revendication 5 ou 6, dans lequel l'unité de réception d'instructions est un commutateur à cadran pour émettre une instruction d'augmentation ou de diminution de la vitesse selon un angle de rotation.

8. Dispositif de commande d'objet mobile selon l'une quelconque des revendications 1 à 7,
dans lequel un premier élément d'opération pour recevoir une instruction d'accélération ou de décélération et un deuxième élément d'opération pour recevoir une instruction de direction sont prévus sur l'objet mobile (1), et
dans lequel l'unité de commande (140) commute un mode sur l'un parmi un mode A dans lequel l'accélération, la décélération et la direction de l'objet mobile (1) sont commandées sur la base d'une opération sur l'un parmi le premier élément d'opération et le deuxième élément d'opération, un mode B dans lequel l'accélération, la décélération et la direction de l'objet mobile (1) sont commandées sur la base d'une opération sur à la fois le premier élément d'opération et le deuxième élément d'opération, et un mode C dans lequel l'accélération, la décélération et la direction de l'objet mobile (1) sont commandées sans être basées sur une opération sur le premier élément d'opération ou le deuxième élément d'opération.

9. Dispositif de commande d'objet mobile selon l'une quelconque des revendications 1 à 8, dans lequel
lorsqu'une valeur obtenue par correction de la vitesse cible sur la base d'une position d'opération de l'unité de réception d'instructions dépasse la première vitesse, l'unité de commande (140) définit la vitesse cible finale comme étant la première vitesse, l'unité de commande (140) déplace l'objet mobile (1) à la vitesse cible finale.

10. Dispositif de commande d'objet mobile selon l'une quelconque des revendications 1 à 9, dans lequel
l'unité de commande (140) décide de la vitesse cible en corrigeant une vitesse cible par défaut en fonction d'une situation lorsque l'objet mobile (1) se déplace.

11. Procédé de commande d'objet mobile comportant :
la reconnaissance, par un ordinateur de commande d'un objet mobile (1) capable de se déplacer à la fois sur une chaussée et dans une région prescrite différente de la chaussée, du fait que l'objet mobile (1) se déplace sur la chaussée ou dans la région prescrite ;
la commande au moins partielle, par l'ordinateur, d'une vitesse de l'objet mobile (1) ;
et
la limitation, par l'ordinateur, de la vitesse de l'objet mobile (1) se déplaçant sur la chaussée à une première vitesse (V1) et la limitation de la vitesse de l'objet mobile (1) se déplaçant dans la région prescrite à une deuxième vitesse (V2) inférieure à la première vitesse (V1),
**caractérisé en ce que**
lorsque l'ordinateur reconnaît que l'objet mobile (1) se déplace sur la chaussée, l'ordinateur décide d'une vitesse cible (Vref) inférieure à la première vitesse (V1), et l'ordinateur décide d'une vitesse cible finale (V#) en corrigeant la vitesse cible décidée (Vref) sur la base d'une instruction de vitesse d'un occupant par l'intermédiaire d'une unité de réception d'instructions prévue sur l'objet mobile (1).

12. Support de stockage stockant un programme pour amener un ordinateur de commande d'un objet mobile (1) capable de se déplacer à la fois sur une chaussée et dans une région prescrite différente de la chaussée à :
reconnaître si l'objet mobile (1) se déplace sur la chaussée ou dans la région prescrite ;
commander au moins partiellement une vitesse de l'objet mobile (1) ; et
limiter la vitesse de l'objet mobile se déplaçant sur la chaussée à une première vitesse (V1) et limiter la vitesse de l'objet mobile (1) se déplaçant dans la région prescrite à une deuxième vitesse (V2) inférieure à la première vitesse (V1),
**caractérisé en ce que**
lorsque l'ordinateur reconnaît que l'objet mobile (1) se déplace sur la chaussée, le programme amène l'ordinateur à décider d'une vitesse cible (Vref) inférieure à la première vitesse (V1), et amène l'ordinateur à décider d'une vitesse cible finale (V#) en corrigeant la vitesse cible décidée (Vref) sur la base d'une instruction de vitesse d'un occupant par l'intermédiaire d'une unité de réception d'instructions prévue sur l'objet mobile (1).
